# EUROPEAN PATENT APPLICATION

(11) **EP 4 629 121 A1**
(43) Date of publication of application: **08.10.2025**
(21) Application number: 24168544.5
(22) Date of filing: 04.04.2024
(51) Int. Cl.: G06F 21/64, H04L 9/08, H04L 9/00, G06F 21/62

(54) **PROCESSING A BLOCKCHAIN TRANSACTION OVER A PEER-TO-PEER NETWORK**

(71) Applicant: BSV Association, 6300 Zug (CH)
(72) Inventor: Kellenschwiler, Darren, 6300 Zug (CH)
(74) Representative: Appleyard Lees IP LLP

(57) **Abstract**

The present disclosure relates to a computer-implemented method of processing a blockchain transaction over a peer-to-peer network including an originator device, an originator server, a beneficiary device, a beneficiary server, and a non-custodial wallet hosted on the beneficiary server. The method comprises: sending a linked key associated with the blockchain transaction and blockchain transaction information from the originator device to the non-custodial wallet on the beneficiary server via the originator server, the linked key derived from a secret shared between the originator device and the beneficiary device; performing verification of the linked key, by the beneficiary device, using the secret and the blockchain transaction information; and performing one of pre-authorising the blockchain transaction and rejecting the blockchain transaction at the non-custodial wallet in response to performing the verification by the beneficiary device

## Description

### TECHNICAL FIELD

The present disclosure relates to processing a blockchain transaction over a peer-to-peer network. More specifically, the blockchain transaction involves a non-custodial hosted wallet.

### BACKGROUND

Blockchain transactions involving non-custodial hosted wallets are sometimes preferred to transactions involving custodial hosted wallets so that a private key is kept on a device of a beneficiary. In this way, integrity of the private key is enhanced.

Typically, hierarchical deterministic (HD) keys are used for non-custodial hosted wallets. Such non-custodial hosted wallets may be stored on a beneficiary server associated with a beneficiary device. HD keys allow extended public keys (xpubs) to be stored on the beneficiary server. The xpubs can derive a public key (pubkey) when requested by an originator. The corresponding transaction is then automatically accepted because xpubs can be linked to the pubkeys.

It is an object of the present disclosure to improve on the prior art.

### SUMMARY

According to one aspect disclosed herein, there is provided a computer-implemented method of processing a blockchain transaction over a peer-to-peer network including an originator device, an originator server, a beneficiary device, a beneficiary server, and a non-custodial wallet hosted on the beneficiary server, the method comprising: sending a linked key associated with the blockchain transaction and blockchain transaction information from the originator device to the non-custodial wallet on the beneficiary server via the originator server, the linked key derived from a secret shared between the originator device and the beneficiary device; performing verification of the linked key, by the beneficiary device, using the secret and the blockchain transaction information; and performing one of pre-authorising the blockchain transaction and rejecting the blockchain transaction at the non-custodial wallet in response to performing the verification by the beneficiary device. Using linked keys derived from secrets, rather than storing xpubs on the beneficiary server, improves security of the non-custodial hosted wallet. This is because if someone were to gain access to an xpub, they would then be able to derive all associated pubkeys, in effect linking all previous and future transactions associated with it. Therefore, omitting the xpubs and using a secret shared between the originator and beneficiary devices, without storing the secret on a server, means that a third party cannot link any previous or future transactions associated with the beneficiary. Should the beneficiary need to submit evidence linking them to a particular counterparty in response to a lawful order, they are able to submit individual shared secrets revealing their link to the counterparty in question without compromising their right to privacy with respect to unrelated transactions. Additionally, any prospective attacker cannot pick a prospective target since there is no way for them to link transactions. This is a defensive strategy much like the motion dazzle of zebras, it becomes impossible to pick out an individual to target from the seemingly endless stripes.

In an embodiment, performing the verification by the beneficiary device comprises: generating a new linked key by combining the secret with a reference and an output; and one of: if the new linked key matches the linked key, the method comprises the pre-authorizing, by the beneficiary device, the blockchain transaction in the non-custodial wallet hosted on the beneficiary server, wherein the pre-authorizing includes storing the output of the blockchain transaction in the non-custodial wallet; and if the new linked key does not match the linked key, instructing, by the beneficiary device, the non-custodial wall to reject the blockchain transaction in the non-custodial wallet.

In an embodiment, the computer-implemented method further comprises: sending, by the non-custodial wallet hosted on the beneficiary server, a status update to the originator device via the originator server, wherein the status update is configured to indicate whether the blockchain transaction has been one of rejected and pre-approved. This may be described differently as the status update is configured to indicate whether the blockchain transaction has been either rejected or pre-approved.

In an embodiment, the computer-implemented method further comprises: after receiving the status update, receiving, by the originator device, a blockchain transaction built by the originator; and sending, by the originator device, the blockchain transaction to the non-custodial wallet hosted on the beneficiary server via the originator server.

In an embodiment, the computer-implemented method further comprises: validating, by the non-custodial wallet hosted on the beneficiary server, the blockchain transaction sent from the originator device.

In an embodiment, validating the blockchain transaction comprises: running simplified payment verification, SPV; and checking the output of the blockchain transaction match the output of the pre-authorized blockchain transaction stored in the non-custodial hosted wallet.

In an embodiment, the computer-implemented method further comprises: broadcasting, from the non-custodial wallet hosted on the beneficiary server, the blockchain transaction in response to validating the blockchain transaction.

In an embodiment, prior to sending the linked key associated with the blockchain transaction and the blockchain transaction information from the originator device to the non-custodial wallet hosted on the beneficiary server via the originator server, the method further comprises: sending a blockchain transaction request from the originator device to the non-custodial wallet via the originator server; and sending the blockchain transaction information associated with the blockchain transaction request from the non-custodial wallet to the originator device via the originator server.

In an embodiment, prior to sending the blockchain transaction request from the originator device to the non-custodial wallet via the originator server, the method further comprises: receiving a user input on the originator device to send the blockchain transaction request to the non-custodial wallet, and wherein sending the blockchain transaction request from the originator device to the non-custodial wallet via the originator server occurs in response to receiving the user input.

In an embodiment, the blockchain transaction information comprises outputs and a blockchain transaction reference.

In an embodiment, the outputs comprise a transaction amount involved in the blockchain transaction and a script template. The transaction amount may be an amount, e.g. a number satoshis. The amount may be a transaction amount in terms of a base indivisible token unit of the blockchain, e.g. satoshis.

In an embodiment, after receiving the linked key by the non-custodial wallet, the method further comprises: notifying to a beneficiary, by the beneficiary device, the blockchain transaction being requested; and receiving a user input at the beneficiary device to do one of approve and disapprove the blockchain transaction.

In an embodiment, after disapproving the blockchain transaction at the beneficiary device, the method further comprises: instructing, by the beneficiary device, the beneficiary server to reject the blockchain transaction.

In an embodiment, the computer-implemented method further comprising, prior to sending a linked key associated with the blockchain transaction from the originator device to the non-custodial wallet on the beneficiary server via the originator server: generating, between the originator device and the beneficiary device, the secret by performing a Diffie-Hellman key exchange; storing the secret on the originator device; and storing the secret on the beneficiary device.

According to an aspect of the present disclosure, there is provided a computer program embodied on computer-readable storage and configured so as, when run on one or more processors, to perform the method of any preceding aspect or embodiment.

According to an aspect of the present disclosure, there is provided a peer-to-peer computer network comprising a plurality of devices and a plurality of associated servers, the plurality of devices including an originator device, a beneficiary device, the plurality of servers including an originator server and a beneficiary server, the beneficiary server hosting a non-custodial hosted wallet, wherein the originator device is configured to send a linked key associated with a blockchain transaction to the non-custodial wallet on the beneficiary server via the originator server, the linked key derived from a secret shared between the originator device and the beneficiary device, and blockchain transaction information, wherein the beneficiary device is configured to performing verification of the linked key using the secret and the blockchain transaction information; and the non-custodial wallet hosted on the beneficiary server is configured to do one of pre-authorise the blockchain transaction and reject the blockchain transaction in response to the beneficiary device performing verification.

According to an aspect of the present disclosure, there is provided a computer-implemented method of processing a blockchain transaction over a peer-to-peer network, the computer-implemented method comprising: sending, by an originator device via an originator server, a linked key associated with the blockchain transaction and blockchain transaction information to a non-custodial wallet hosted on a beneficiary server, the linked key derived from a secret shared between the originator device and the beneficiary device; receiving, by the originator device, a status update that the blockchain transaction has been pre-approved by a beneficiary device associated with the beneficiary server based on verification of the linked key using the secret; and sending, by the originator device, the transaction to the non-custodial wallet via the originator server after receiving the status update.

According to an aspect of the present disclosure, there is provided a computer-implemented method of processing a blockchain transaction over a peer-to-peer network, the computer-implemented method comprising: receiving, by a beneficiary device, a linked key associated with the blockchain transaction and blockchain transaction information sent by an originator device via an originator server and a beneficiary server, the beneficiary server hosting a non-custodial hosted wallet, the linked key derived from a secret shared between the originator device and the beneficiary device; performing, by the beneficiary device, verification of the linked key using the secret and the blockchain transaction information; and instructing, by the beneficiary device, the non-custodial wallet to do one of pre-authorize the blockchain transaction and reject the blockchain transaction in response to performing the verification by the beneficiary device.

### BRIEF DESCRIPTION OF THE DRAWINGS

To assist understanding of embodiments of the present disclosure and to show how such embodiments may be put into effect, reference is made, by way of example only, to the accompanying drawings in which:
Figure 1 is a schematic block diagram of a system for implementing a blockchain,
Figure 2 schematically illustrates some examples of transactions which may be recorded in a blockchain,
Figure 3A is a schematic block diagram of a client application,
Figure 3B is a schematic mock-up of an example user interface that may be presented by the client application of Figure 3A,
Figure 4 is a schematic block diagram of some node software for processing transactions,
Figure 5 shows a process flow of setting up a secret between an originator device and a beneficiary device using a side channel, and
Figure 6 shows a flow chart summarising steps associated with a computer-implemented method of processing a blockchain transaction over a peer-to-peer network, according to at least one embodiment.

### DETAILED DESCRIPTION OF EMBODIMENTS

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions. Coinbase transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example, blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

In an "output-based" model (sometimes referred to as a UTXO-based model), the data structure of a given transaction comprises one or more inputs and one or more outputs. Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

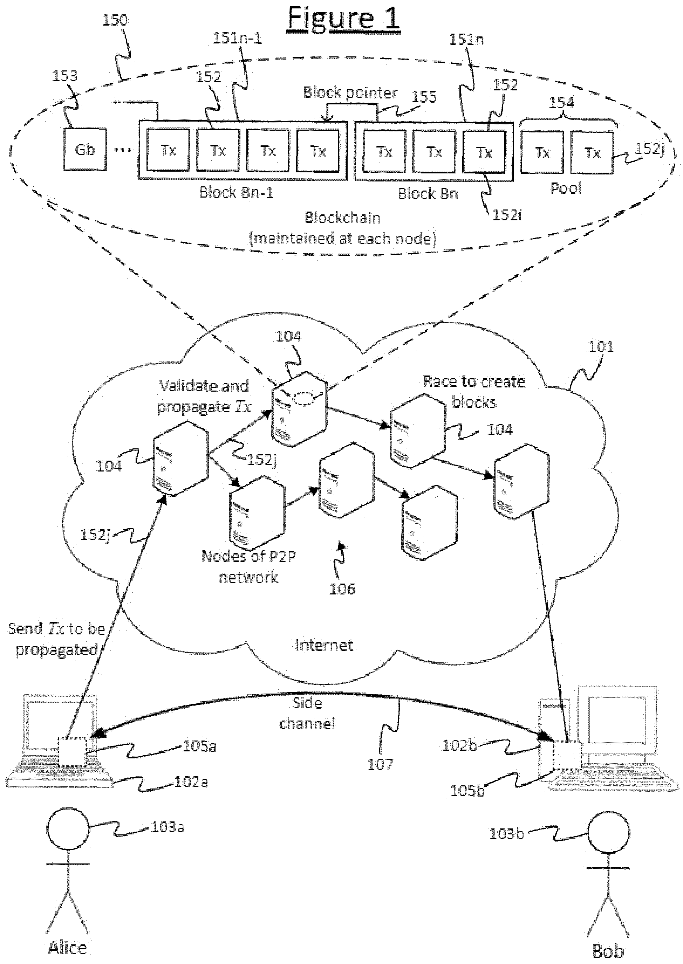

Figure 1 shows an example system 100 for implementing a blockchain 150. The system 100 may comprise a packet-switched network 101, typically a wide-area internetwork such as the Internet. The packet-switched network 101 comprises a plurality of blockchain nodes 104 (often referred to as "miners") that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout.

A blockchain node 104 may be configured to forward transactions 152 to other blockchain nodes 104, and thereby cause transactions 152 to be propagated throughout the network 106. A blockchain node 104 may be configured to create blocks 151 and to store a respective copy of the same blockchain 150 in their respective memory. A blockchain node 104 may also maintain an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. Spending or redeeming does not necessarily imply transfer of a financial asset, though that is certainly one common application. More generally spending could be described as consuming the output, or assigning it to one or more outputs in another, onward transaction. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Any given blockchain node may be configured to perform one or more of the following operations: validating transactions, storing transactions, propagating transactions to other peers, performing consensus (e.g. proof-of-work) / mining operations. In some examples, each type of operation is performed by a different node 104. That is, nodes may specialise in particular operation. For example, a nodes 104 may focus on transaction validation and propagation, or on block mining. In some examples, a blockchain node 104 may perform more than one of these operations in parallel. Any reference to a blockchain node 104 may refer to an entity that is configured to perform at least one of these operations.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal or device, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position" or "nonce"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

Some account-based transaction models share several similarities with the output-based transaction model described herein. For example, as mentioned above, the data field of an account-based transaction may point back to a previous transaction, which is equivalent to the input of an output-based transaction which references an outpoint a previous transaction. Thus both models enable linking between transactions. As another example, an account-based transaction contains a "recipient" field (in which a receiving address of an account is specified) and a "value" field (in which an amount of digital asset may be specified). Together the recipient and value fields are equivalent to the output of an output-based transaction which may be used to assign an amount of digital asset to a blockchain address. Similarly, an account-based transaction has a "signature" field which includes a signature for the transaction. The signature is generated using the sender's private key and confirms the sender has authorized this transaction. This is equivalent to an input / unlocking script of an output-based transaction which, typically, includes a signature for the transaction. When both types of transaction are submitted to their respective blockchain networks, the signatures are checked to determine whether the transaction is valid and can be recorded on the blockchain. On an account-based blockchain, a "smart contact" refers to a transaction that contains a script configured to perform one or more actions (e.g. send or "release" a digital asset to a recipient address) in response to one or more inputs (provided by a transaction) meeting one or more conditions defined by the smart contact's script. The smart contract exists as a transaction on the blockchain, and can be called (or triggered) by subsequent transactions. Thus, in some examples, a smart contract may be considered equivalent to a locking script of an output-based transaction, which can be triggered by a subsequent transaction, and checks whether one or more conditions defined by the locking script are met by the input of the subsequent transaction.

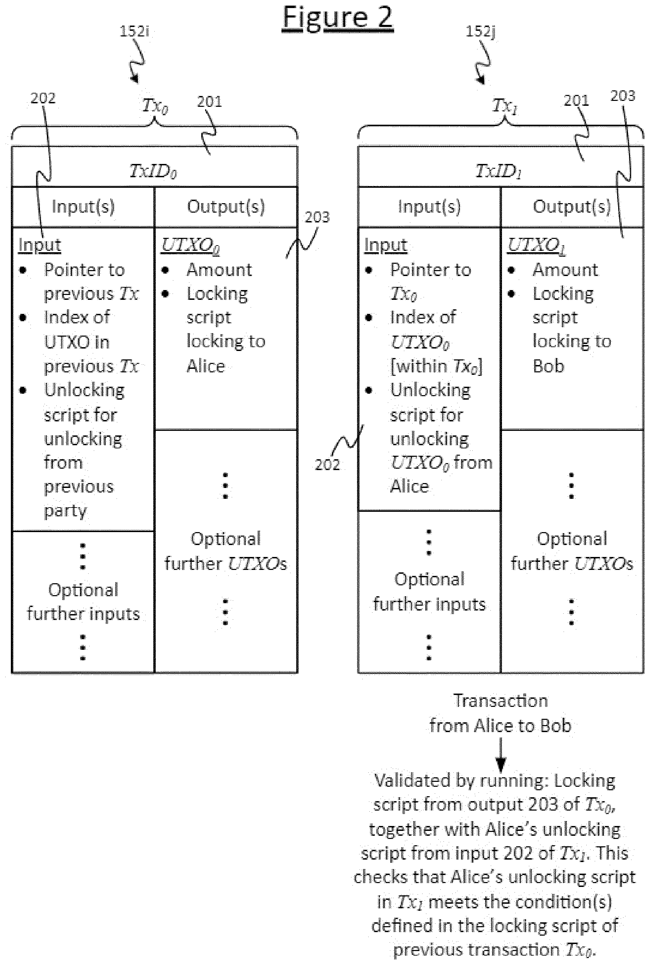

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled " *Tx₁".* It takes an amount of the digital asset that is locked to Alice in the output 203 of a preceding transaction 152i in the sequence, and transfers at least some of this to Bob. The preceding transaction 152i is labelled *"Tx₀"* in Figure 2. *Tx₀* and *Tx₁* are just arbitrary labels. They do not necessarily mean that *Tx₀* is the first transaction in the blockchain 151, nor that *Tx₁* is the immediate next transaction in the pool 154. *Tx₁* could point back to any preceding (i.e. antecedent) transaction that still has an unspent output 203 locked to Alice.

The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction *Tx₀* comprises a particular UTXO, labelled here *UTXO₀.* Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Locking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, *UTXO₀* in the output 203 of *Tx₀* comprises a locking script [Checksig *P_{A}*] which requires a signature Sig *P_{A}* of Alice in order for *UTXO₀* to be redeemed (strictly, in order for a subsequent transaction attempting to redeem *UTXO₀* to be valid). [Checksig *P_{A}*] contains a representation (i.e. a hash) of the public key *P_{A}* from a public-private key pair of Alice. The input 202 of *Tx₁* comprises a pointer pointing back to *Tx₁* (e.g. by means of its transaction ID, *TxID₀,* which in embodiments is the hash of the whole transaction *Tx₀*)*.* The input 202 of *Tx₁* comprises an index identifying *UTXO₀* within *Tx₀,* to identify it amongst any other possible outputs of *Tx₀.* The input 202 of *Tx₁* further comprises an unlocking script <Sig *P_{A}*> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction *Tx₁* arrives at a blockchain node 104, the node applies the node protocol. This comprises running the locking script and unlocking script together to check whether the unlocking script meets the condition defined in the locking script (where this condition may comprise one or more criteria).

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key *P_{A}.* In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

As shown in Figure 1, the client application on each of Alice and Bob's computer equipment 102a, 120b, respectively, may comprise additional communication functionality. This additional functionality enables Alice 103a to establish a separate side channel 107 with Bob 103b (at the instigation of either party or a third party). The side channel 107 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 107 may be used to exchange any other transaction related data, such as keys, negotiated amounts or terms, data content, etc.

The side channel 107 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 107 as referred to anywhere herein may comprise any one or more links via one or more networking technologies or communication media for exchanging data "off-chain", i.e. separately from the blockchain network 106. Where more than one link is used, then the bundle or collection of off-chain links as a whole may be referred to as the side channel 107. Note therefore that if it is said that Alice and Bob exchange certain pieces of information or data, or such like, over the side channel 107, then this does not necessarily imply all these pieces of data have to be send over exactly the same link or even the same type of network.

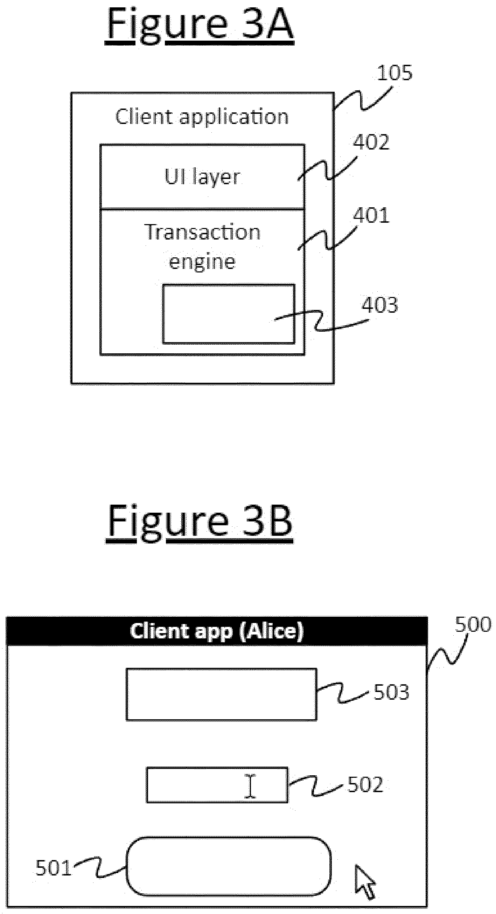

Figure 3A illustrates an example implementation of the client application 105 for implementing embodiments of the presently disclosed scheme. The client application 105 comprises a transaction engine 401 and a user interface (Ul) layer 402. The transaction engine 401 is configured to implement the underlying transaction-related functionality of the client 105, such as to formulate transactions 152, receive and/or send transactions and/or other data over the side channel 301, and/or send transactions to one or more nodes 104 to be propagated through the blockchain network 106, in accordance with the schemes discussed above and as discussed in further detail shortly. In accordance with embodiments disclosed herein, the transaction engine 401 of each client 105 comprises a function 403 such as those defined in relation to the computer-implemented methods described below.

The UI layer 402 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could comprise one or more display screens (touch or non-touch screen) for providing a visual output, one or more speakers for providing an audio output, and/or one or more haptic output devices for providing a tactile output, etc. The user input means could comprise for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note: whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 401 may be implemented in a separate application than the UI layer 402, or the functionality of a given module such as the transaction engine 401 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 3B gives a mock-up of an example of the user interface (Ul) 500 which may be rendered by the UI layer 402 of the client application 105a on Alice's equipment 102a. It will be appreciated that a similar UI may be rendered by the client 105b on Bob's equipment 102b, or that of any other party.

By way of illustration Figure 3B shows the UI 500 from Alice's perspective. The UI 500 may comprise one or more UI elements 501, 502, 502 rendered as distinct UI elements via the user output means.

For example, the UI elements may comprise one or more user-selectable elements 501 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands). The options enable the user (Alice) to ...

Alternatively or additionally, the UI elements may comprise one or more data entry fields 502, through which the user can ... These data entry fields are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may comprise one or more information elements 503 output to output information to the user. E.g. this/these could be rendered on screen or audibly.

It will be appreciated that the particular means of rendering the various UI elements, selecting the options and entering data is not material. The functionality of these UI elements will be discussed in more detail shortly. It will also be appreciated that the UI 500 shown in Figure 3 is only a schematized mock-up and in practice it may comprise one or more further UI elements, which for conciseness are not illustrated.

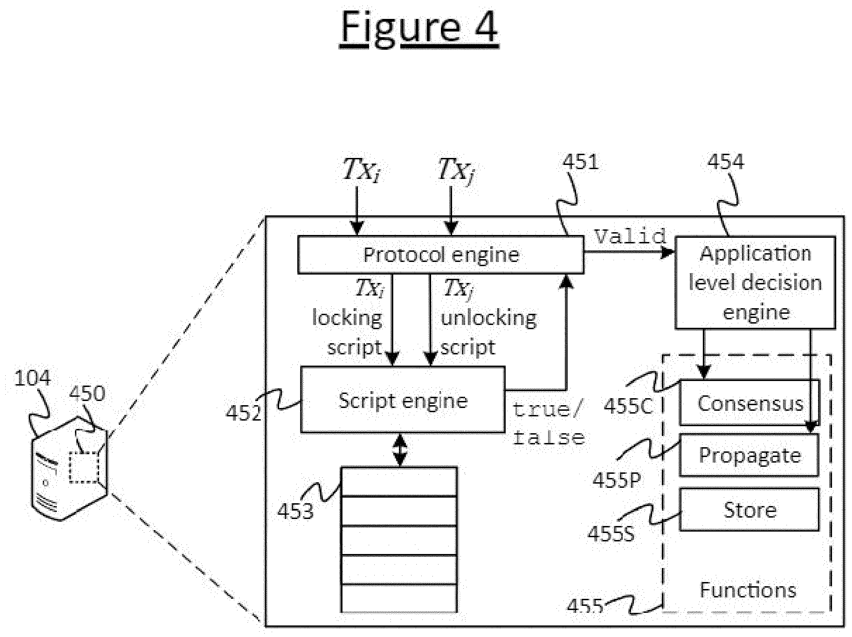

Figure 4 illustrates an example of the node software 450 that is run on each blockchain node 104 of the network 106, in the example of a UTXO- or output-based model. Note that another entity may run node software 450 without being classed as a node 104 on the network 106, i.e. without performing the actions required of a node 104. The node software 450 may contain, but is not limited to, a protocol engine 451, a script engine 452, a stack 453, an application-level decision engine 454, and a set of one or more blockchain-related functional modules 455. Each node 104 may run node software that contains one or more of: a consensus module 455C (for example, proof-of-work), a propagation module 455P and a storage module 455S (for example, a database). The consensus module 455C may contain a validation module (not shown) configured to validate transactions according to the blockchain protocol. The validation module may instead be separate from the consensus module 455C. One or more of the modules may operate in parallel. A node 104 may contain additional modules. The protocol engine 401 is typically configured to recognize the different fields of a transaction 152 and process them in accordance with the node protocol. When a transaction 152j (*Txⱼ*) is received having an input pointing to an output (e.g. UTXO) of another, preceding transaction 152i (*Tx*_{*m-*1}), then the protocol engine 451 identifies the unlocking script in *Txⱼ* and passes it to the script engine 452. The protocol engine 451 also identifies and retrieves *Txᵢ* based on the pointer in the input of *Txⱼ. Txᵢ* may be published on the blockchain 150, in which case the protocol engine may retrieve *Txᵢ* from a copy of a block 151 of the blockchain 150 stored at the node 104. Alternatively, *Txᵢ* may yet to have been published on the blockchain 150. In that case, the protocol engine 451 may retrieve *Txᵢ* from the ordered set 154 of unpublished transactions maintained by the node104. Either way, the script engine 451 identifies the locking script in the referenced output of *Txᵢ* and passes this to the script engine 452.

The script engine 452 thus has the locking script of *Txᵢ* and the unlocking script from the corresponding input of *Txⱼ.* For example, transactions labelled *Tx*₀ and *Tx*₁ are illustrated in Figure 2, but the same could apply for any pair of transactions. The script engine 452 runs the two scripts together as discussed previously, which will include placing data onto and retrieving data from the stack 453 in accordance with the stack-based scripting language being used (e.g. Script).

By running the scripts together, the script engine 452 determines whether or not the unlocking script meets the one or more criteria defined in the locking script - i.e. does it "unlock" the output in which the locking script is included? The script engine 452 returns a result of this determination to the protocol engine 451. If the script engine 452 determines that the unlocking script does meet the one or more criteria specified in the corresponding locking script, then it returns the result "true". Otherwise it returns the result "false".

In an output-based model, the result "true" from the script engine 452 is one of the conditions for validity of the transaction. Typically there are also one or more further, protocol-level conditions evaluated by the protocol engine 451 that must be met as well; such as that the total amount of digital asset specified in the output(s) of *Txⱼ* does not exceed the total amount pointed to by its inputs, and that the pointed-to output of *Txᵢ* has not already been spent by another valid transaction. The protocol engine 451 evaluates the result from the script engine 452 together with the one or more protocol-level conditions, and only if they are all true does it validate the transaction *Txⱼ.* The protocol engine 451 outputs an indication of whether the transaction is valid to the application-level decision engine 454. Only on condition that *Txⱼ* is indeed validated, the decision engine 454 may select to control both of the consensus module 455C and the propagation module 455P to perform their respective blockchain-related function in respect of *Txⱼ.* This comprises the consensus module 455C adding *Txⱼ* to the node's respective ordered set of transactions 154 for incorporating in a block 151, and the propagation module 455P forwarding *Txⱼ* to another blockchain node 104 in the network 106. Optionally, in embodiments the application-level decision engine 454 may apply one or more additional conditions before triggering either or both of these functions. E.g. the decision engine may only select to publish the transaction on condition that the transaction is both valid and leaves enough of a transaction fee.

Note also that the terms "true" and "false" herein do not necessarily limit to returning a result represented in the form of only a single binary digit (bit), though that is certainly one possible implementation. More generally, "true" can refer to any state indicative of a successful or affirmative outcome, and "false" can refer to any state indicative of an unsuccessful or non-affirmative outcome. For instance in an account-based model, a result of "true" could be indicated by a combination of an implicit, protocol-level validation of a signature and an additional affirmative output of a smart contract (the overall result being deemed to signal true if both individual outcomes are true).

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

Some embodiments have been described in terms of the blockchain network implementing a proof-of-work consensus mechanism to secure the underlying blockchain. However proof-of-work is just one type of consensus mechanism and in general embodiments may use any type of suitable consensus mechanism such as, for example, proof-of-stake, delegated proof-of-stake, proof-of-capacity, or proof-of-elapsed time. As a particular example, proof-of-stake uses a randomized process to determine which blockchain node 104 is given the opportunity to produce the next block 151. The chosen node is often referred to as a validator. Blockchain nodes can lock up their tokens for a certain time in order to have the chance of becoming a validator. Generally, the node who locks the biggest stake for the longest period of time has the best chance of becoming the next validator.

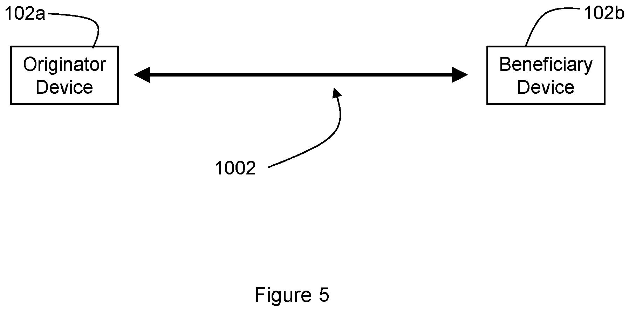

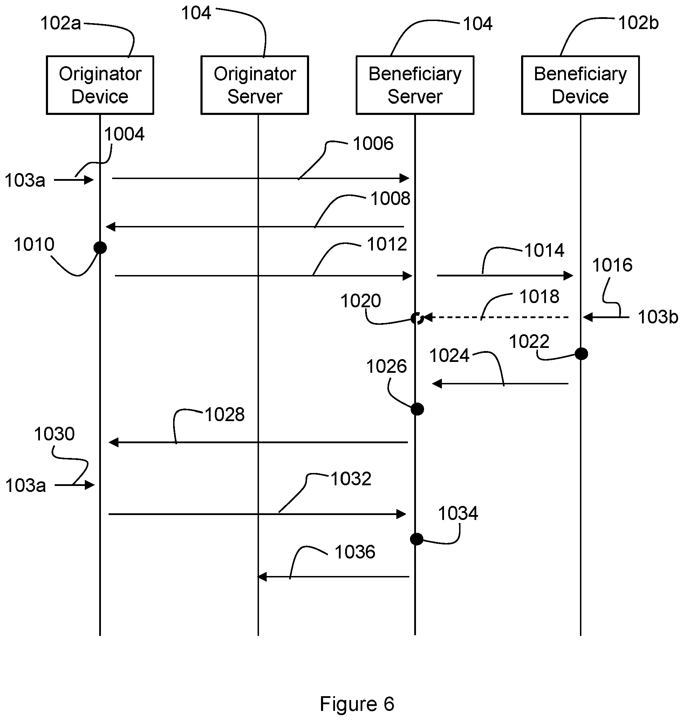

With reference to Figures 5 and 6, according to at least one embodiment, there is provided a computer-implemented method of processing a blockchain transaction over the peer-to-peer network 106, including an originator device 102a (e.g. 1^{st} party's device), an originator server 104 associated with the originator device 102a, a beneficiary device 102b (e.g. 2^{nd} party's device), and a beneficiary server 104 associated with the beneficiary device, wherein a non-custodial wallet is hosted on a the beneficiary server 104.

With specific reference to Figure 5, the method initially comprises generating, between the originator device 102a and the beneficiary device 102b, a secret. An example of a secret sharing protocol which may be used is described in WO2017145016. In summary, the secret is generated by performing 1002 a Diffie-Hellman key exchange using a side channel between the originator device 102a and the beneficiary device 102b. The secret is stored on the originator device 102a. In addition, the secret is stored on the beneficiary device 102b. The originator device 102a and the beneficiary device 102b do not send the secret over the network 106. Therefore, the servers 104 do not receive, or store, the secret.

With reference to Figure 6, the method then comprises receiving 1004 a user input from the originator 103a (e.g. Alice) on the originator device 102a. The user input may be an instruction to send a blockchain transaction request to the non-custodial wallet. In response to originator device 102a receiving the user input, the method may comprise sending 1006 the blockchain transaction request from the originator device to the non-custodial wallet (hosted on the beneficiary server) via the originator server 104.

Next, the method may comprise sending 1008 blockchain transaction information associated with the blockchain transaction request from the non-custodial wallet to the originator device 102a via the originator server 104. The blockchain transaction information comprises one or more outputs and a blockchain transaction reference. The outputs may comprise a transaction amount involved in the blockchain transaction. The transaction amount may be an amount. The amount may be a lowest divisible token amount of a blockchain, e.g. a number satoshis. Other token amounts may be used on other blockchains but when the transaction relates to a Bitcoin payment, the number of satoshis is the lowest divisible token amount. The outputs may also comprise a script template. The script template may include a plurality of operation codes, or opcodes. The opcodes may include a public key opcode (OP_PUBKEY) or a public key hash opcode (OP_PUBKEYHASH). One of these two opcodes should be included somewhere in the script template. They're placeholders for where to put a pubkey or pubkeyhash when the template is being converted into an actual script. These locations are where the real values are plugged in when they've been calculated. It is possible to have multiple opcodes and it is possible to use both of these opcodes. However, it is usually more appropriate to use one or the other. The public key hash is a hash of the public key. In technical terms, the hash may be termed a double hash. In which case, the public key hash is a sha265 ripemd160 of the public key. The reference may be any unique string associated with the payment. The reference may be computer generated or may be a user input.

The method may then comprise calculating 1010 by the originator device a linked key from the secret. More specifically, the originator device 102a calculates the linked key by combining the shared secret with the reference and the output(s). The originator device creates valid locking scripts by replacing the opcodes across all script templates with the linked keys. The method then comprises sending 1012 the linked key from the originator device to the non-custodial wallet via the originator server 104. This is achieved by sending the locking scripts from the originator device 102a to the non-custodial wallet via the originator server 104, along with the reference. The combination of the locking scrips and the reference may be called a transaction proposal.

Next, the method comprises sending 1014 the transaction proposal to the beneficiary device 102b. The method then comprises notifying to the beneficiary 103b, by the beneficiary device, the blockchain transaction being requested. Next the method comprises receiving 1016 a user input from the beneficiary, e.g. Bob, 103b either to approve or reject the transaction proposal.

Next, if the user rejects the transaction proposal, the method comprises sending 1018 an instruction from the beneficiary device 102b to the beneficiary server 104 to reject the transaction. The non-custodial wallet pre-rejects 1020 the transaction by storing the reference and the outputs associated with transaction so any subsequent attempt to pay the wallet by the originator can be rejected.

Alternatively, if the user approves the transaction proposal, the method comprises performing 1022 verification of the linked key, by the beneficiary device 102b, using the secret stored on the beneficiary device 102b and the blockchain transaction information. This is achieved by generating, by the beneficiary device 102b, a new linked key by combining the secret with the reference and the output. In addition, the method may comprise pre-authorizing, by the beneficiary device 102b, the blockchain transaction in the non-custodial wallet if the new linked key matches the linked key from the originator device 102a, where pre-authorizing includes storing the output of the blockchain transaction in the non-custodial wallet. Alternatively, the method may comprise instructing, by the beneficiary device 102b, the non-custodial wallet to reject the blockchain transaction in the non-custodial wallet if the new linked key does not match the linked key. In either case, the method comprises sending 1024 an instruction from the beneficiary device 102b to the wallet to pre-authorize or pre-reject the transaction. Then, the wallet either pre-authorises 1026 or pre-rejects the transaction and stores the reference and the output(s) so that a subsequent transaction can be identified and authorised or rejected without having to contact the beneficiary again.

Next, the method comprises sending 1028, by the non-custodial wallet hosted on the beneficiary server 104, a status update to the originator device 102a via the originator server 104. The status update is configured to indicate whether the blockchain transaction has been one of pre-rejected or pre-authorised.

The method then comprises, after receiving the status update, receiving 1030, by the originator device 102a, a blockchain transaction built by the originator 103a. The transaction includes the outputs and reference as specified in the transaction information. The blockchain transaction may be signed by the originator 103a. Then the originator 103a sends 1032 the blockchain transaction to the wallet via the originator server 104.

Next, the method comprises validating 1034, by the non-custodial wallet, the blockchain transaction sent from the originator device.

The validation is performed by running simplified payment verification, SPV, as described in and checking the output of the blockchain transaction match the output of the pre-authorised blockchain transaction stored in the wallet based on the reference. In other words, if the reference and the outputs match those of a pre-authorised transaction in the wallet. If the outputs and/or reference do not match outputs and/or reference stored in the wallet, or match those associated with a pre-rejection, the blockchain transaction is rejected.

Finally, the method comprises broadcasting 1036, from the non-custodial wallet, the blockchain transaction in response to validating the blockchain transaction. Broadcasting in this sense may be taken to mean that the transaction is broadcast from the beneficiary server, or node, to all other servers, or nodes, in the peer-to-peer network 106. In this way, the blockchain transaction can be updated at every node in the peer-to-peer network 106.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". "Operative" or "operative to" includes "arranged/arranged to" and "configured/configured to". The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method of processing a blockchain transaction over a peer-to-peer network including an originator device, an originator server, a beneficiary device, a beneficiary server, and a non-custodial wallet hosted on the beneficiary server, the method comprising:
sending a linked key associated with the blockchain transaction and blockchain transaction information from the originator device to the non-custodial wallet on the beneficiary server via the originator server, the linked key derived from a secret shared between the originator device and the beneficiary device;
performing verification of the linked key, by the beneficiary device, using the secret and the blockchain transaction information; and
performing one of pre-authorising the blockchain transaction and rejecting the blockchain transaction at the non-custodial wallet in response to performing the verification by the beneficiary device.

2. The computer-implemented method of claim 1, wherein performing the verification by the beneficiary device comprises:
generating a new linked key by combining the secret with a reference and an output; and
one of:
if the new linked key matches the linked key, the method comprises the pre-authorizing, by the beneficiary device, the blockchain transaction in the non-custodial wallet hosted on the beneficiary server, wherein the pre-authorizing includes storing the output of the blockchain transaction in the non-custodial wallet; and
if the new linked key does not match the linked key, instructing, by the beneficiary device, the non-custodial wall to reject the blockchain transaction in the non-custodial wallet.

3. The computer-implemented method of Claim 2, further comprising:
sending, by the non-custodial wallet hosted on the beneficiary server, a status update to the originator device via the originator server,
wherein the status update is configured to indicate whether the blockchain transaction has been one of pre-rejected and pre-authorized.

4. The computer-implemented method of Claim 3, further comprising:
after receiving the status update, receiving, by the originator device, a blockchain transaction built by the originator; and
sending, by the originator device, the blockchain transaction to the non-custodial wallet hosted on the beneficiary server via the originator server.

5. The computer-implemented method of Claim 4, further comprising:
validating, by the non-custodial wallet hosted on the beneficiary server, the blockchain transaction sent from the originator device.

6. The computer-implemented method of Claim 5, wherein:
validating the blockchain transaction comprises:
running simplified payment verification, SPV; and
checking the output of the blockchain transaction match the output of the pre-authorized blockchain transaction stored in the non-custodial hosted wallet.

7. The computer-implemented method of Claim 6, further comprising:
broadcasting, from the non-custodial wallet hosted on the beneficiary server, the blockchain transaction in response to validating the blockchain transaction.

8. The computer-implemented method of any preceding claim, wherein prior to sending the linked key associated with the blockchain transaction and the blockchain transaction information from the originator device to the non-custodial wallet hosted on the beneficiary server via the originator server, the method further comprises:
sending a blockchain transaction request from the originator device to the non-custodial wallet via the originator server; and
sending the blockchain transaction information associated with the blockchain transaction request from the non-custodial wallet to the originator device via the originator server.

9. The computer-implemented method of Claim 8, wherein prior to sending the blockchain transaction request from the originator device to the non-custodial wallet via the originator server, the method further comprises:
receiving a user input on the originator device to send the blockchain transaction request to the non-custodial wallet, and
wherein sending the blockchain transaction request from the originator device to the non-custodial wallet via the originator server occurs in response to receiving the user input.

10. The computer-implemented method of any preceding claim, wherein the blockchain transaction information comprises outputs and a blockchain transaction reference.

11. The computer-implemented method of Claim 10, wherein the outputs comprise a transaction amount involved in the blockchain transaction and a script template.

12. The computer-implemented method of any preceding claim, further comprising, prior to sending a linked key associated with the blockchain transaction from the originator device to the non-custodial wallet on the beneficiary server via the originator server:
generating, between the originator device and the beneficiary device, the secret by performing a Diffie-Hellman key exchange;
storing the secret on the originator device; and
storing the secret on the beneficiary device.

13. A computer program embodied on computer-readable storage and configured so as, when run on one or more processors, to perform the method of any preceding claim.

14. A peer-to-peer computer network comprising a plurality of devices and a plurality of associated servers, the plurality of devices including an originator device, a beneficiary device, the plurality of servers including an originator server and a beneficiary server, the beneficiary server hosting a non-custodial hostel wallet,
wherein the originator device is configured to send a linked key associated with a blockchain transaction to the non-custodial wallet on the beneficiary server via the originator server, the linked key derived from a secret shared between the originator device and the beneficiary device, and blockchain transaction information,
wherein the beneficiary device is configured to performing verification of the linked key using the secret and the blockchain transaction information; and
the non-custodial wallet hosted on the beneficiary server is configured to do one of pre-authorise the blockchain transaction and reject the blockchain transaction in response to the beneficiary device performing verification.
